# EUROPÄISCHE PATENTSCHRIFT

(11) **EP 2 829 846 B1**
(45) Veröffentlichungstag und Bekanntmachung des Hinweises auf die Patenterteilung: **06.12.2017**
(21) Anmeldenummer: 13003688.2
(22) Anmeldetag: 23.07.2013
(51) Int. Cl.: G01D 5/14, G06F 3/0338, G05G 9/047

(54) **Vorrichtung und Verfahren zur Positionsbestimmung mit Fremdfeldkompensation**
Method and device for determining position with external field compensation
Dispositif et procédé de détermination de position avec compensation des champs étrangers

(43) Veröffentlichungstag der Anmeldung: 28.01.2015
(73) Patentinhaber: Seuffer GmbH & Co. KG, 75365 Calw-Hirsau (DE)
(72) Erfinder: Fuchs, Jochen, 75365 Calw (DE)
(74) Vertreter: Winter, Brandl, Fürniss, Hübner, Röss, Kaiser, Polte - Partnerschaft mbB

(56) Entgegenhaltungen:
- EP-A2- 1 168 234
- EP-A2- 2 159 546
- WO-A2-93/20535
- WO-A2-2009/009286

## Beschreibung

Die vorliegende Erfindung bezieht sich auf eine Vorrichtung und ein Verfahren zur Bestimmung der Position eines ersten mechanischen Elements in Bezug auf ein zweites mechanisches Element. Im Besonderen bezieht sich die Anmeldung auf eine magnetische Positions- bzw. Lagebestimmung für Benutzereingabeschnittstellen wie beispielsweise Joysticks, Lenkschalter oder andere Schalteinrichtungen oder Drehschalter.

Aus der DE 10 2007 001 745 A1 oder der EP 1 464 918 A2 ist bekannt, die Hebelstellung eines Joysticks mit Hilfe einer dreidimensional messenden Magnetfeldsensoreinrichtung zu erfassen.

Neben weiterentwickelten konventionellen Hallsensoren, die Magnetfelder senkrecht zur Chipoberfläche messen können, gibt es auch die Möglichkeit, Sensoren zu realisieren, die es gestatten, Magnetfelder parallel zur Chipoberfläche zu messen. Damit lassen sich monolithisch integrierte dreidimensionale (3D) Magnetfeldsensoren realisieren. Solche Sensorchips besitzen für jede der drei magnetischen Achsen einen eigenen Sensor. Die Digitalisierung der Messwerte kann auf dem Sensorchip bereits integriert sein. Es ist damit möglich, solche Chips direkt an einen Rechner oder Mikrocontroller anzuschließen.

Solche Sensoren können Teil einer Sensorbibliothek sein. Unter Verwendung dieser Bibliothek können kundenspezifische integrierte Schaltkreise (ASICs) entwickelt werden.

Komplette Systeme zur Magnetfeldmessung mit Auswertung können in einem ASIC realisiert werden. Insbesondere können Analog-Digital-Umsetzer, Digital-Analog-Umsetzer, Mikrocontroller, Schnittstellen und beliebige digitale Logik zusammen mit den Sensoren und deren Betriebsschaltung auf einem Chip integriert werden. Damit ergibt sich neben eventuellen Preisvorteilen bei hohen Stückzahlen auch ein guter Schutz vor Nachbau. Weitere Vorteile sind der niedrige Platzbedarf und eine Erhöhung der Funktionssicherheit durch Reduzierung externer Verbindungen. Die Sensorelemente für Magnetfelder können auch mit anderen Sensoren (z. B. Lichtsensoren, Kraft-/Torsionssensoren, Temperatursensoren oder dergleichen) auf einem Chip kombiniert sein. Dies ermöglicht komplexe Systeme mit verschiedenen Sensoren auf einem Chip.

Da mit integrierten 3D-Magnetfeldsensoren praktisch punktförmig alle drei Achsen des Magnetfelds kostengünstig erfasst werden können, öffnen sich gegenüber konventionellen Magnetfeldsensoren eine Reihe neuer Anwendungen, wie beispielsweise ein- und mehrachsige Magnetschalter mit nur einem Chip, kontaktlose Potentiometer mit nur einem Chip, Näherungsschalter mit großem Arbeitsabstand, punktgenaue Positionsmessung mittels mehrdimensionaler magnetischer Skalen und Drehwinkelmessung mit hoher Auflösung.

Die vorgenannten 3D-Magnetfeldsensoren sind im Betrieb verschiedensten Störmagnetfeldern ausgesetzt, die das Messergebnis der Sensoren beeinflussen. Es besteht daher Bedarf an einer Fremdfeldkompensation für solche Sensoren bzw. Sensoranordnungen.

Aus der EP 1 168 234 A2 ist eine Koordinateneingabevorrichtung bekannt, bei der ein erster Magnet, ein zweiter Magnet und eine Vielzahl von magnetoelektrischen Wandlern auf einem Rahmen vorgesehen sind, wobei der zweite Magnet im Ansprechen auf einwirkende Kräfte kippbar angeordnet ist. Dabei zeigt die magnetische Achse des zweiten Magneten beim Kippvorgang immer im Wesentlichen auf einen Rotationspunkt. Ausgangsspannungen der Vielzahl von magnetoelektrischen Wandlern ändern sich entsprechend einer Veränderung einer Lücke zwischen den magnetoelektrischen Wandlern und dem zweiten Magneten, sodass die Ausgangsspannungen eine Gruppe von X,Y-Koordinaten in einem zweidimensionalen Raum angeben.

Des Weiteren zeigt die WO 93/20535 A2 einen Joystick, bei dem sich ein Steuerarm beim Betätigen eines Handgriffs biegt, sodass ein Magnet um einen Dreh punkt gekippt wird. Dieser Drehpunkt befindet sich im Wesentlichen im Mittelpunkt des Magneten in einer Hall-Sensoren aufweisenden Ebene, sodass die Kippbewegung des Magneten relativ zu den Hall-Sonden ein Positionssignal erzeugt.

Darüber hinaus zeigt die EP 2 159 546 A2 ein Messverfahren zur berührungslosen Erfassung linearer Relativbewegungen zwischen einer Sensorenanordnung und einem Permanentmagneten.

Des Weiteren offenbart die WO 2009/009286 A2 ein System mit Hall-Effekt, bei dem eine Position eines magnetischen Elements in Bezug auf ein Sensorelement bestimmt und die Orientierung des magnetischen Flusses bei der Bewegung eines Betätigungselements bestimmt wird.

Der vorliegenden Erfindung liegt daher die Aufgabe zugrunde, ein Verfahren und eine Vorrichtung zur Positionsbestimmung mit Fremdfeldkompensation bereitzustellen.

Diese Aufgabe wird gelöst durch eine Positionsbestimmungsvorrichtung gemäß Patentanspruch 1 und ein Positionsbestimmungsverfahren gemäß Patentanspruch 10.

Erfindungsgemäß wird mittels eines Magneten ein Magnetfeld erzeugt, das bei einer relativen Bewegung zwischen dem ersten mechanischen Element und dem zweiten mechanischen Element im Wesentlichen um einen Rotationspunkt wandert und dessen Hauptrichtung beim Wandern immer im Wesentlich auf den Rotationspunkt zeigt. Das Nahfeld dieses Magnetfelds wird mittels dreidimensional messenden Hallelementen an zwei verschiedenen Orten erfasst, zwischen denen sich der Rotationspunkt befindet. Somit kann die Position eines der mechanischen Elemente in Bezug auf das andere Element auf Grundlage der Differenz der Messwerte an den beiden verschiedenen Orten bestimmt werden. Die Positionsbestimmung erfolgt anhand zweier Raumwinkel eines Differenzvektors der von zwei Hallelementen gemessenen Vektoren des Magnetfelds. Dabei kann jedes Raumwinkelpaar, wie bspw. xy- und xz- Raumwinkel verwendet werden.

Der das Magnetfeld erzeugende Magnet wird also auf einer kreisförmigen, elliptischen oder spiralförmigen Bewegungslinie um die beiden Sensoren oder Sensorzellen der Sensoranordnung bewegt, wobei dessen magnetische Achse immer im Wesentlich auf den Rotationspunkt zwischen den beiden Sensorzellen zeigt. Hierdurch werden die Sensorzellen in jeder Magnetposition mit einem zumindest nahe dem Maximum liegenden Differenzfeld beaufschlagt und ein im Wesentlichen gleichmäßiger Verlauf des Differenzvektors über die Bewegung des Magneten kann realisiert werden. Über eine reine Winkelauswertung des Differenzvektors kann dann auch der Einfluss von Feldstärkeschwankungen des Magnets ausgeschlossen oder zumindest verringert werden. Dabei können vorzugsweise Magnete mit zylindrischer Ausformung und axialer Magnetisierung zum Einsatz kommen, wobei die Polarisationsrichtung beliebig ist. Bei dem Magneten zur Erzeugung des zu messenden Magnetfelds kann es sich also um einen stabförmigen Magneten handeln.

Das bewegliche der beiden mechanischen Elemente kann ein Joystick-Hebel, ein Drehschalterknopf, ein Lenkstockschalterhebel oder eine andere mechanisch betätigbare Schalt- oder Steuereinrichtung sein.

Der Rotationspunkt der kreisförmigen, elliptischen oder spiralförmigen Bewegung des das Magnetfeld erzeugenden Magneten kann auf einer Verbindungslinie zwischen den beiden Magnetfeldsensoren angeordnet sein, vorzugsweise in der Mitte.

Des Weiteren kann der das Magnetfeld erzeugende Magnet in Bezug auf die Ebene der Magnetfeldsensoren in einem vorbestimmten Höhenwinkel liegend angeordnet sein. Dieser Höhenwinkel kann vorzugsweise aus einem Bereich zwischen 35° und 65° gewählt werden, beispielsweise 60° oder 45° betragen. Dadurch kann eine ausreichende Differenzerfassung bei guter Realisierbarkeit gewährleistet werden. In anderen Ausführungsbeispielen kann der Magnet in Bezug auf die Ebene der Magnetfeldsensoren senkrecht stehend angeordnet sein.

Die Erfindung wird nachfolgend anhand von Ausführungsbeispielen unter Bezugnahme auf die Zeichnungsfiguren näher erläutert. Es zeigen:
- Fig. 1: ein schematisches Funktionsblockschaltbild einer Positionsbestimmungsvorrichtung gemäß einem ersten Ausführungsbeispiel;
- Fig. 2: eine schematische Darstellung einer Sensoranordnung gemäß verschiedenen Ausführungsbeispielen;
- Fig. 3A und 3B: eine Vorderansicht bzw. Seitenansicht eines Magnetsystems mit aufrecht stehendem Magneten gemäß einem zweiten Ausführungsbeispiel;
- Fig. 4A und 4B: eine Vorderansicht bzw. Seitenansicht eines Magnetsystems mit aufrecht stehendem Magneten gemäß einem dritten Ausführungsbeispiel;
- Fig. 5A und 5B: eine Vorderansicht bzw. eine Seitenansicht eines Magnetsystems mit in einem Höhenwinkel von 45° schräg angeordnetem Magneten gemäß einem vierten Ausführungsbeispiel;
- Fig. 6A und 6B: eine Vorderansicht bzw. eine Seitenansicht eines Magnetsystems mit in einem Höhenwinkel von 45° schräg angeordneten Magneten gemäß einem fünften Ausführungsbeispiel;
- Fig. 7A bis 7C: Schnittansichten verschiedener Schaltstellungen eines Lenkstockschaltersystems mit Positionsbestimmungsvorrichtung gemäß einem sechsten Ausführungsbeispiel;
- Fig. 8A und 8B: eine Draufsicht bzw. eine Seitenansicht eines schematischen Magnetsystems mit in einem Höhenwinkel von 60° schräg angeordneten Magneten gemäß einem siebten Ausführungsbeispiel;
- Fig. 9: ein dreidimensionales Diagramm mit dem Verlauf eines Differenzvektors eines Drehschalters mit zweistufiger Zugfunktion;
- Fig. 10A und 10B: eine Draufsicht bzw. eine Seitenansicht eines schematischen Magnetsystems mit in einem Höhenwinkel von 60° angeordneten Magneten gemäß einem achten Ausführungsbeispiel;
- Fig. 11: ein Diagramm mit dem Verlauf der xz- und yz-Winkel des Differenzvektors eines Drehschalters mit zweistufiger Zugfunktion;
- Fig. 12: einen Detailausschnitt aus dem Diagramm in Fig. 11; und
- Fig. 13A bis 13C: Schnittansichten eines Drehschalters mit Positionsbestimmungsvorrichtung in verschiedenen Zugstellungen gemäß einem neunten Ausführungsbeispiel.

Es folgt nun eine Beschreibung verschiedener Ausführungsbeispiele der vorliegenden Erfindung basierend auf einer Positionsbestimmungsvorrichtung mit magnetischer Positionserfassung und Fremdfeldkompensation.

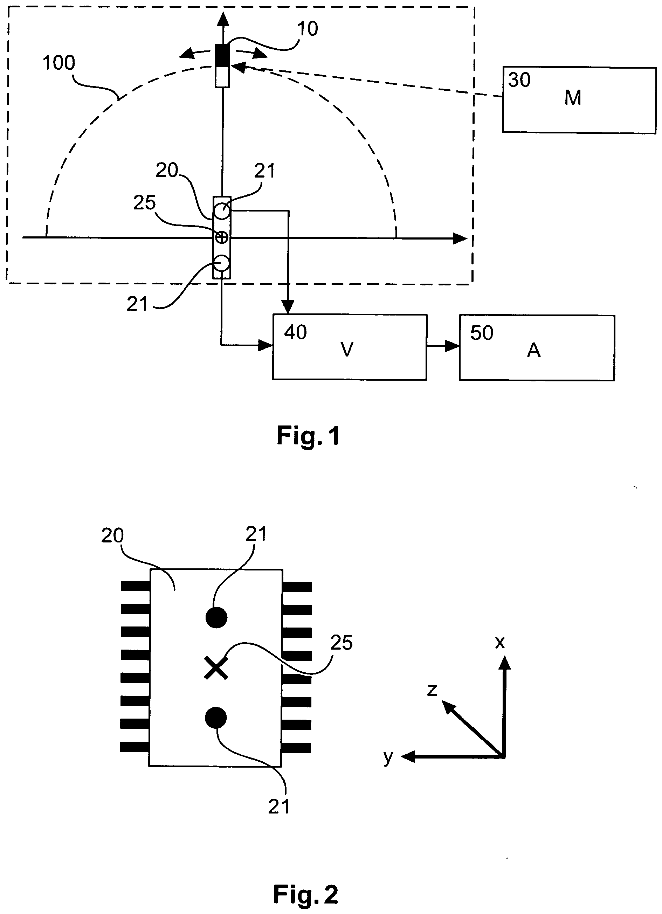

Fig. 1 zeigt ein schematisches Funktionsblockschaltbild einer Positionsbestimmungsvorrichtung gemäß einem ersten Ausführungsbeispiel.

In einem gestrichelten Block ist die magnetische Positionserfassung des Magnetsystems prinzipiell dargestellt. Ein mittels einer mechanischen Betätigungseinrichtung (M) 30, wie beispielsweise ein Hebel oder Schalter oder Drehknopf, gekoppelter Magnet (Permanentmagnet oder Elektromagnet) 10 ist so angeordnet, dass er sich bei einer Bewegung der mechanischen Betätigungseinrichtung 30 im Zuge eines Schalt- oder Bedienvorgangs auf einer im Wesentlichen kreisförmigen, elliptischen oder spiralförmigen Bewegungsbahn 100 bewegt, wobei seine magnetische Achse fortlaufend in Richtung eines Rotationspunkts 25 zeigt. Eine Sensoranordnung 20 ist angeordnet zur Erfassung des Nahfelds des Magneten 10 und umfasst zwei Sensorzellen 21, die beispielsweise dreidimensionale Hallelemente aufweisen können. Analoge oder bereits digitalisierte Messwerte der Sensorzellen 21 werden einer Verarbeitungseinrichtung (V) 40 zugeführt, wo die Position des durch die mechanische Betätigungseinrichtung 30 bewegten mechanischen Elements basierend auf einer Differenzbildung ermittelt und einer Anzeigeeinrichtung (A) 50 zur Anzeige oder weiteren Auswertung zugeführt wird. Bei der Anzeigeeinrichtung 50 kann es sich auch um ein durch die mechanische Betätigungseinrichtung 30 gesteuertes System wie beispielsweise ein Computersystem, ein Lichtsystem, eine Fahrzeugsteuerung usw. handeln, je nachdem für welche Zwecke die Benutzerschnittstelle mit integrierter Positionsbestimmung verwendet wird.

Durch die differenzielle Auswertung des durch den Magneten 10 erzeugten Magnetfelds werden durch Fremdfelder erzeugte Gleichtaktsignale der Sensorzellen 21 ausgelöscht oder unterdrückt, solange sie zu ähnlichen Messergebnissen in beiden Sensorzellen 21 führen. Damit kann eine gute Fremdfeldunterdrückung erreicht werden. Durch die fortlaufende Ausrichtung des Magneten in Richtung des zwischen den Sensorzellen 21 befindlichen Rotationspunkts 25 ergibt sich ein hoher Differenzwert zwischen den beiden Messwerten der Sensorzellen 21, so dass eine gute Positionserfassung und -bestimmung sichergestellt ist.

Fig. 2 zeigt eine schematische Draufsicht auf die Sensoranordnung (beispielsweise ein Dual-in-line-Chip) mit den beiden Sensorzellen 21 und dem dazwischen angeordneten virtuellen Rotationspunkt 25, auf den der sich um die Sensoranordnung 20 bewegende Magnet 10 fortlaufend zeigt. Rechts daneben ist ein Koordinatensystem mit den Koordinatenachsen x, y und z als Referenz dargestellt. Diese Zuordnung des Koordinatensystems soll auch für die nachfolgenden Ausführungsbeispiele Gültigkeit haben.

In den Ausführungsbeispielen erfolgt also eine magnetische Fremdfeldkompensation durch Subtraktion zweier nebeneinander angeordneter Sensorzellen. Das Nutzfeld wird durch den im Nahbereich positionierten Magneten 10 erzeugt, welcher die Sensorzellen in unterschiedlichen Richtungen anregt und durch das hieraus entstehende Differenzsignal einen positionsabhängigen Differenzvektor bewirkt. Im Folgenden wird das Verhältnis der Komponenten des Magnetsystems am Beispiel einer Joystick-Anwendung gemäß einem zweiten und dritten Ausführungsbeispiel erläutert.

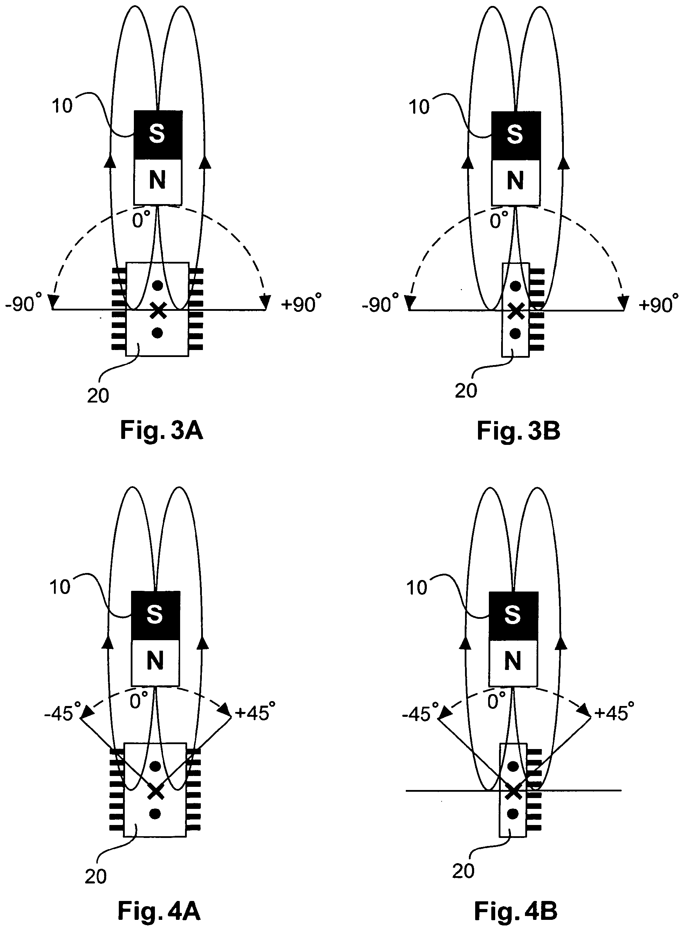

Die Fig. 3A und 3B zeigen eine Vorderansicht bzw. eine Seitenansicht des aus dem Magneten 10 und der Sensoranordnung 20 bestehenden Magnetsystems. Bei der Joystick-Anwendung gemäß dem zweiten und dritten Ausführungsbeispiel ist die Sensoranordnung 20 stehend angeordnet, wobei der Magnet 10 in dessen Nullstellung senkrecht über der Sensoranordnung 20 steht. In dieser Stellung sind somit die y- und z-Werte des Differenzvektors null und der x-Wert ist klein. Beim Verlassen der Nullstellung im Zuge einer Bewegung bzw. mechanischen Betätigung des mit dem Magneten 10 gekoppelten bewegten Elements verkleinert sich der x-Wert des Differenzvektors bis zu einem Versatzwinkel von ca. +/- 45° bis auf den Wert Null, wobei sich gleichzeitig der y- und/oder z-Wert des Differenzvektors bis zu dessen Maximalwert vergrößert. Oberhalb eines Versatzwinkels von ca. +/- 45° bis zu einem Versatzwinkel von ca. +/- 90° verkleinert sich der y- und/oder z-Wert des Differenzvektors wieder bis zu dem Wert Null und der x-Wert nimmt mit umgekehrtem Vorzeichen wieder zu.

Somit kann unter Heranziehung der x-, y- und z-Werte des Differenzvektors zur Positionsbestimmung eine eindeutige Positionszuweisung bis zu einem Versatzwinkel von knapp +/- 90° erreicht werden. Ebenso verhält es sich auf der gegenüberliegenden 180°-Position.

Die Fig. 4A und 4B zeigen eine Vorderansicht bzw. Seitenansicht des Magnetsystems gemäß einem dritten Ausführungsbeispiel für die Joystick-Anwendung, wobei zur Positionsbestimmung die xy- und xz-Raumwinkel des Differenzvektors herangezogen werden. In dem dritten Ausführungsbeispiel ist eine eindeutige Positionszuweisung bis zu einem Versatzwinkel von nur ca. +/- 45° möglich. Ebenso verhält es sich auf der gegenüberliegenden 180°-Position. Durch einen Versatz des Rotationspunktes linear zur Anordnung der Sensorzellen kann der maximal mögliche Öffnungswinkel noch leicht beeinflusst werden.

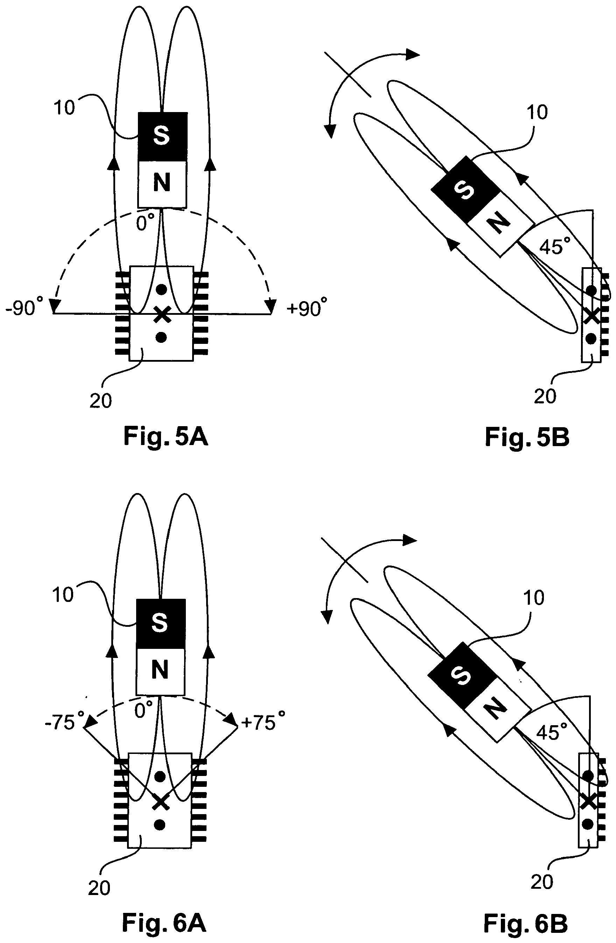

Es folgt nun eine nähere Erläuterung einer Lenkstockschalteranwendung basierend auf in den Fig. 5A und 5B, 6A und 6B bzw. 7A bis 7C gezeigten vierten bis sechsten Ausführungsbeispielen.

Die Fig. 5A und 5B zeigen eine schematische Vorderansicht bzw. Seitenansicht eines Magnetsystems für die Lenkstockschalteranwendung gemäß dem vierten Ausführungsbeispiel, wobei der Magnet 10 mit einem Höhenwinkel von 45° zur x-Achse der Sensorzellen der Sensoranordnung 20 angeordnet ist und hierbei auf den Rotationspunkt zwischen den Sensorzellen zeigt. Bei diesem Höhenwinkel wird der Magnet im Lenkstockhebel über der stehend angeordneten Sensoranordnung 20 auf einer zumindest teilweise im Wesentlichen kugelförmigen Fläche bewegt, wobei die magnetische Achse immer im Wesentlichen auf den Rotationspunkt zwischen den Sensorzellen der Sensoranordnung 20 zielt. Wie durch die ergänzende Strich- und Pfeilanordnung in Fig. 5B links oben dargestellt ist, kann der Magnet 10 durch eine Druck- oder Zugfunktion des Lenkstockschalters in gewissen Grenzen in seinem Höhenwinkel gekippt werden. Auch hier zielt die magnetische Achse immer im Wesentlichen auf den Rotationspunkt zwischen den Sensorzellen der Sensoranordnung 20.

Werden zur Positionsbestimmung die x-, y- und z-Werte des Differenzvektors herangezogen, so ist eine eindeutige Positionszuweisung ungefähr bis zu einem Rotationswinkel von knapp +/- 90° möglich. Ebenso verhält es sich auf der gegenüberliegenden 180°-Position.

Die Fig. 6A und 6B zeigen eine schematische Vorderansicht bzw. Seitenansicht des Magnetsystems der Lenkstockschalteranwendung gemäß dem fünften Ausführungsbeispiel, das im Wesentlichen dem vierten Ausführungsbeispiel entspricht. Beim fünften Ausführungsbeispiel werden jedoch zur Positionsbestimmung die xz- und yz-Raumwinkel des Differenzvektors herangezogen, so dass eine eindeutige Positionszuweisung ungefähr bis zu einem Rotationswinkel von lediglich +/- 45 ° möglich ist. Ebenso verhält es sich auf der gegenüberliegenden 180°-Position.

Im vierten bis sechsten Ausführungsbeispiel kann es sich bei dem Magneten 10 beispielsweise um einen zylindrischen Magneten mit einem Durchmesser D = 5 mm und einer Höhe H = 5 mm handeln, wobei der Radius zum Rotationspunkt beispielsweise 5,5 mm betragen kann. Bei einer Schrittweite von 5° sind bspw. sieben Positionen pro Zugstellung möglich. Bei einer Zugfunktion von 5° sind bspw. drei Zugstellungen möglich, was einem Höhenwinkel des Magneten 10 zur Sensoranordnung 20 von 40°, 45° bzw. 50° entspricht.

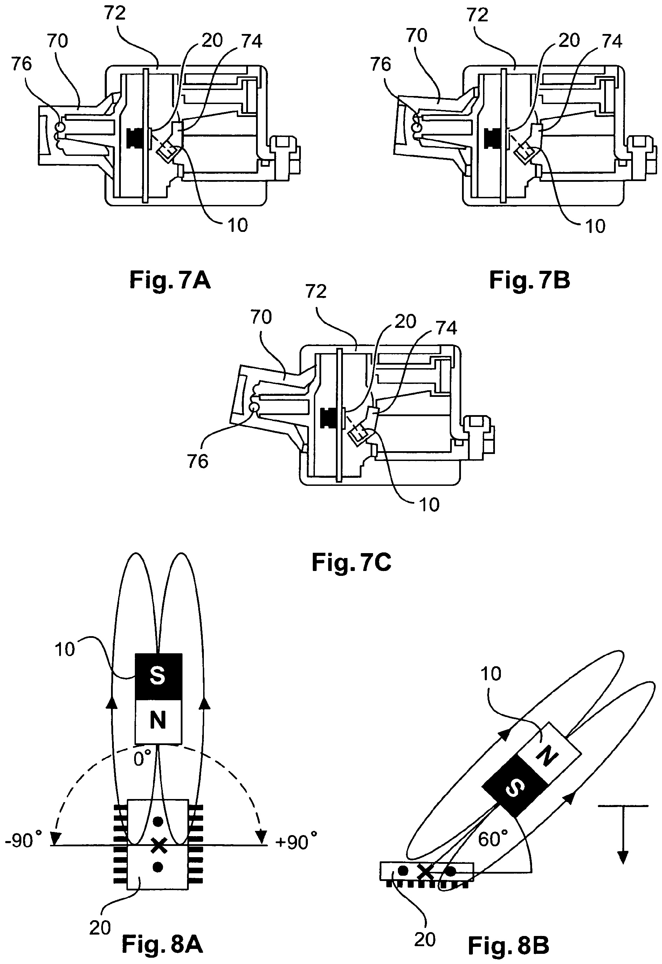

Die Fig. 7A bis 7C zeigen Schnittansichten verschiedener Schaltstellungen eines Lenkstockschalters mit integriertem magnetischem Positionsbestimmungssystem gemäß dem sechsten Ausführungsbeispiel. Der Lenkstockschalter ist mit einem mechanischen Element 70 starr gekoppelt, das einen Rastmechanismus 76 aufweist. Ferner ist das erste mechanische Element 70 mit einem Aufnahmeelement 74 für den Magneten 10 starr gekoppelt, so dass sich das Aufnahmeelement 74 bei einer Bewegung des Lenkstockschalters entsprechend mitbewegt. Die ebenfalls in den Fig. 7A bis 7C angedeutete mechanische Achse des Magneten 10 zeigt in allen drei Schnittzeichnungen auf einen Rotationspunkt auf einer Sensoranordnung 20, die als Chip auf einer in den Fig. 7A bis 7C senkrecht dargestellten Platine mit weiteren elektronischen Schaltkreisen angeordnet ist. Wie anhand des Rastmechanismus 76 erkennbar ist, wird der Lenkstockschalter in den Fig. 7A bis 7C sukzessive nach oben bewegt, so dass sich der Magnet 10 auf einer Kreisbahn im Uhrzeigersinn in abwärtiger Richtung um die Sensoranordnung 20 bewegt, wobei die magnetische Achse fortlaufend auf den Rotationspunkt auf der Sensoranordnung 20 zeigt.

Die senkrecht angeordnete Platine mit der Sensoranordnung 20 ist mit einem zweiten mechanischen Element 72 der Lenkstockschalterkonstruktion starr gekoppelt, wobei sich das zweite mechanische Element 72 bei einer Veränderung der Lenkstockhebelstellung nicht bewegt.

Der in Fig. 7A bis 7C dargestellte Lenkstockschalter verfügt über drei Schaltbahnen mit jeweils sieben Schaltstellungen. Zum Schalten der Bahnposition wird der Lenkstockschalter senkrecht zur Darstellungsebene der Fig. 7A bis 7C herangezogen bzw. wegbewegt, wobei der Magnet 10 entsprechend einer in der Darstellungsebene und parallel zur Oberfläche der Sensoranordnung 20 verlaufenden Rotationsachse um die Sensoranordnung rotiert. Zum Schalten einer Zugstellung wird der Lenkstockschalter nach oben bzw. unten bewegt, so dass sich der Magnet 10 entsprechend auf einer Kreisbahn nach unten bzw. nach oben mitbewegt.

Eine solche Lenkstockschalterkonstruktion ermöglicht geringe Auswirkungen der Sensorentoleranz, sehr gute Verteilung der Vektorenwinkel über alle Schaltpunkte, einfachstes Abgrenzen der Schaltstellungen und eine nahezu konstante Länge des Differenzvektors.

Selbstverständlich sind auch andere Konstruktionsvarianten denkbar, wobei die Sensoranordnung 20 auch liegend angeordnet sein kann und der Magnet 10 mit einem Höhenwinkel von ca. 45° zur x-Achse der Sensorzellen angeordnet ist und dabei auf den Punkt zwischen den Sensorzellen zielt. Unter diesem Höhenwinkel wird der Magnet 10 dann auch hier per Lenkstockhebel über der liegenden Sensoranordnung 20 auf einer kreisförmigen oder elliptischen Bahn bewegt.

Für eine Druck- oder Zugfunktion des Lenkstockschalters kann der Magnet 10 in gewissen Grenzen in seinem Höhenwinkel auch gekippt werden. Sofern die Rotationsachse bei der Kippung des Höhenwinkels außerhalb des Mittelpunkts der Sensoranordnung 20 liegt, sollte der Magnet 10 in seiner entferntesten Stellung auf den Punkt zwischen den Sensorzellen ausgerichtet sein. Beim Absenken des Magneten 10 aus dieser Position ist der Winkel dann zwar nicht mehr ideal. Da aber durch die zunehmende Feldstärke an der Sensoranordnung 20 die Länge des Differenzvektors weiter vergrößert wird, bleibt dieser noch immer auswertbar.

Bei einem solchen Konstruktionsbeispiel mit liegender Sensoranordnung 20 kann der Magnet 10 eine zylindrische Form mit einem Durchmesser D von 3 mm und einer Höhe H von 3 mm aufweisen, wobei der Radius zum Rotationspunkt ca. 6 mm betragen kann.

Eine solche alternative Konstruktion ermöglicht eine einfachere Mechanik und es kann ein kleinerer Magnet verwendet werden.

Es folgt nun eine Beschreibung verschiedener Ausführungsbeispiele einer Drehschalteranwendung unter Bezugnahme auf die Fig. 8A und 8B, 9, 10A und 10B, 11, 12 und 13A bis 13C.

Die Fig. 8A und 8B zeigen eine schematische Draufsicht bzw. Seitenansicht eines Magnetsystems für die Drehschalteranwendung gemäß einem siebten Ausführungsbeispiel. Wie die Pfeildarstellung in Fig. 8B rechts andeutet, ist der Drehschalter mit einer zusätzlichen Druck-/Zugfunktion ausgestattet.

Die Sensoranordnung 20 ist hier liegend angeordnet, und der Magnet 10 ist mit einem festen Höhenwinkel von 60° (eventuell auch etwas größer oder kleiner) zur x-Achse der Sensoranordnung 20 angeordnet und zielt hierbei auf den Rotationspunkt zwischen den Sensorzellen der Sensoranordnung 20. Mit diesem Höhenwinkel wird der Magnet mit einem Rotor (nicht gezeigt) über der Sensoranordnung 20 auf einer Kreisbahn bewegt.

Für eine Druck- bzw. Zugfunktion des Drehschalters kann der Magnet unter Beibehaltung eines Höhenwinkels in gewissen Grenzen angehoben oder vorzugsweise abgesenkt werden. In der höchsten Stellung sollte der Magnet 10 mit dem oben angegebenen Höhenwinkel auf den Rotationspunkt zwischen den Sensorzellen ausgerichtet sein. Hierbei sollte der Höhenwinkel nicht zu klein gewählt sein, da ansonsten unter Umständen ein relativ großer Radius zwischen Magnet 10 und Sensoranordnung 20 erforderlich wäre, um in der obersten Zugstellung auf den Rotationspunkt zu zielen. Beim Absenken des Magneten 10 aus dieser Position ist der Winkel zwar nicht mehr ideal. Da aber durch die zunehmende Feldstärke an der Sensoranordnung 20 die Länge des Differenzvektors vergrößert wird, bleibt dieser auswertbar.

Werden zur Positionsbestimmung die x-, y- und z-Werte des Differenzvektors herangezogen, so ist eine eindeutige Positionszuweisung bis zu einem Rotationswinkel von knapp +/- 90° möglich. Ebenso verhält es sich auch auf der gegenüberliegenden 180°-Position.

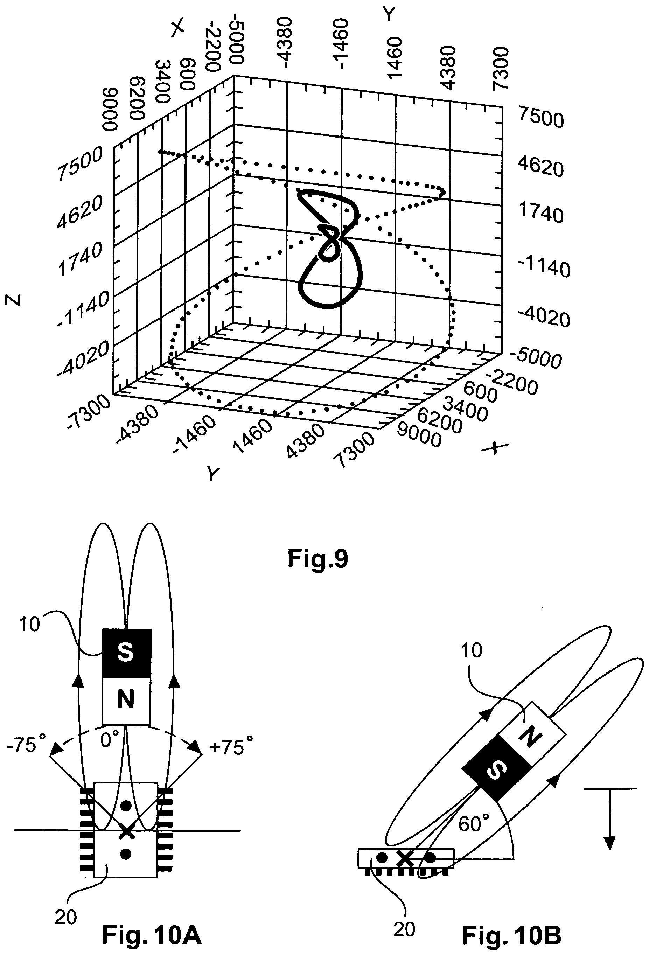

Die Fig. 9 zeigt ein räumliches Diagramm mit dem Verlauf des Differenzvektors eines Drehschalters mit zweistufiger Zugfunktion. In Fig. 9 wurde jede Zugstellung über einen 360°-Rotationsbereich des Drehschalters erfasst.

Aus Fig. 9 ist ersichtlich, dass eine x-y-z-Auswertung nicht im gesamten Rotationsbereich möglich ist. Die obere bzw. untere Grenze des z-Wertes der jeweiligen Kennlinie entspricht der 0°- bzw. 180°-Position des Rotationsbereichs. Lediglich im Kreuzungspunkt bei der +/- 90°-Position ist die Position nicht eindeutig zuweisbar.

Die Fig. 10A und 10B zeigen eine schematische Draufsicht bzw. Seitenansicht eines magnetischen Systems für die Drehschalteranwendung gemäß einem achten Ausführungsbeispiel. Beim achten Ausführungsbeispiel werden zur Positionsbestimmung die xz- und yz-Raumwinkel des Differenzvektors herangezogen. Dadurch ist eine eindeutige Positionsbestimmung bis zu einem Rotationswinkel von lediglich +/- 75° möglich. Ebenso verhält es sich auf der gegenüberliegenden 180°-Position.

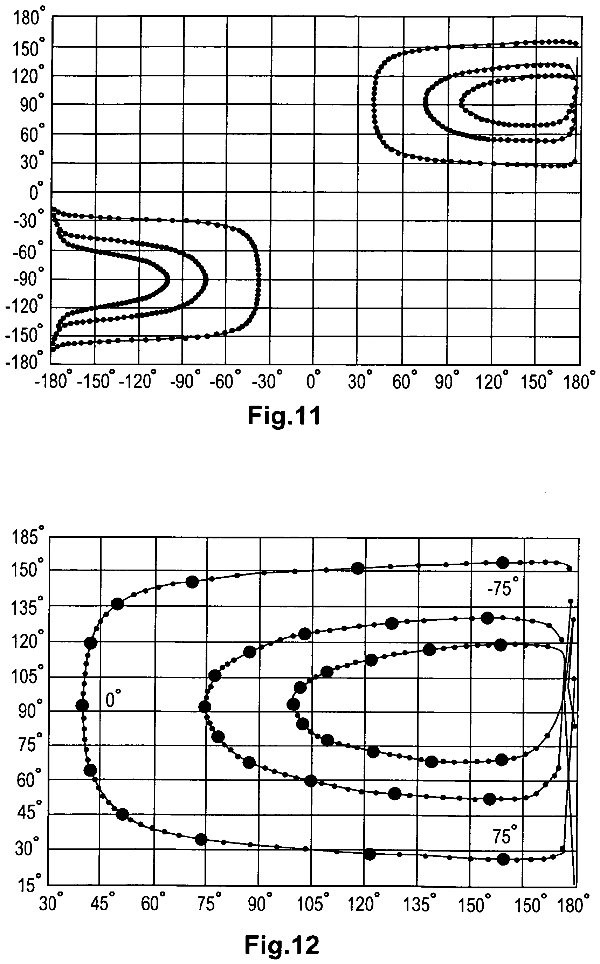

Fig. 11 zeigt ein zweidimensionales Diagramm mit dem Verlauf der xz- und yz-Winkel des Differenzvektors eines Drehschalters mit zweistufiger Zugfunktion. Hierbei wurde jede Zugestellung über einen 360°-Rotationsbereich erfasst.

Wie aus Fig. 11 hervorgeht, ist eine Winkelauswertung des xz- und yz-Winkels des Differenzvektors in einem Rotationsbereich von ca. +/- 75° zur Positionsbestimmung möglich. Im Bereich von +/- 90° gehen aber der y- und z-Wert des Differenzvektors gegen Null. Eine Winkelauswertung des Differenzvektors ist in diesem Bereich daher nicht mehr möglich.

Fig. 12 zeigt einen vergrößerten Ausschnitt des in Fig. 11 rechts oben dargestellten Quadranten, wobei die fett dargestellten Messpunkte einer Rotationsschrittweite des Drehschalters von 15° entsprechen. Die drei verschiedenen Schleifen entsprechen drei verschiedenen Zugstellungen, da es sich um einen Drehschalter mit zweistufiger Zugfunktion handelt. In Fig. 12 sind die Messwerte für die Drehstellungen -75°, 0° und 75° gekennzeichnet.

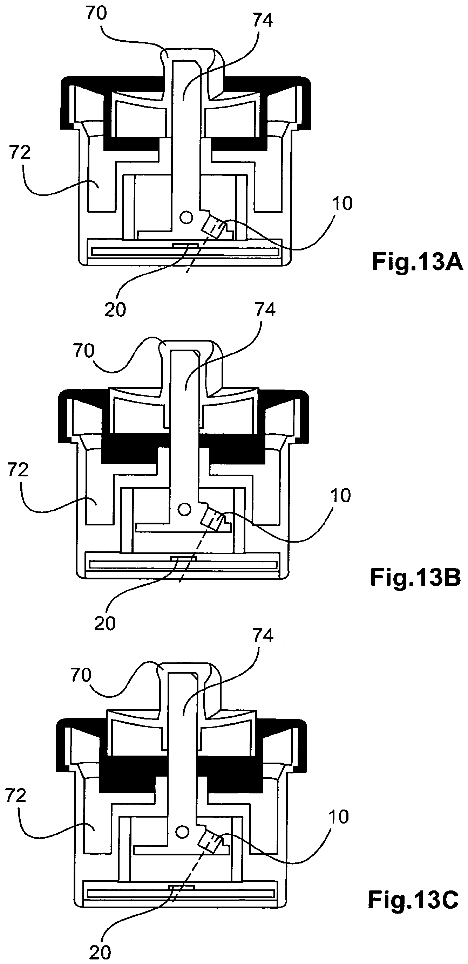

Unter Bezugnahme auf die Fig. 13A bis 13C wird nun ein Konstruktionsbeispiel für einen Drehschalter mit zweistufiger Zugfunktion gemäß einem neunten Ausführungsbeispiel erläutert.

Ein erstes mechanisches Teil 70 entspricht dem Drehknopf und ist mit einem als Rotor ausgebildeten Aufnahmeelement 74 zur Aufnahme des Magneten 10 starr gekoppelt. Die Sensoranordnung 20 ist als Chip auf einer Platine ausgebildet, die mit einem unbeweglichen zweiten mechanischen Element 72 starr gekoppelt ist. Wie aus den Fig. 13A, 13B und 13C hervorgeht, ist die Hauptachse des Magneten 10 je nach Zugstellung des Drehschalters mehr oder weniger auf die Sensoranordnung 20 gerichtet. In der am weitesten herausgezogenen Zugstellung des Drehsensors in Fig. 13C zeigt die Hauptachse des Magneten 10 ungefähr auf den Mittelpunkt der Sensoranordnung 20. In der mittleren Zugstellung gemäß Fig. 13B zeigt die Hauptachse des Magneten 10 auf einen Randbereich der Sensoranordnung, und in der untersten Zugstellung gemäß Fig. 13A liegt die Hauptachse des Magneten 10 bereits geringfügig außerhalb der Sensoranordnung 20. Aufgrund der höheren Stärke des Magnetfelds in der unteren Zugstellung gemäß Fig. 13A ist jedoch noch immer ein ausreichend starkes Magnetfeld zur Auswertung des Differenzsignals vorhanden.

In einem praktischen Beispiel kann ein zylindrischer Magnet mit einem Durchmesser von 5 mm und einer Höhe von 5 mm verwendet werden. In einer ersten Zugstellung können vier Positionen mit einer Winkelschrittweite von 22,5° ausgewertet werden, wobei in den anderen beiden Zugstellungen jeweils nur zwei Positionen mit einem Winkelabstand von 22,5° vorhanden sein können. Der Magnet 10 bewegt sich dabei in einem konstanten Höhenwinkel von 60° zur Sensoranordnung 20.

Selbstverständlich sind auch andere Positionseinteilungen in verschiedenen Zugstellungen anwendbar und bestimmbar.

Das Konstruktionsbeispiel gemäß den Fig. 13A bis 13C kann somit mit einer einfachen Mechanik realisiert werden. Da die Differenzvektoren von der Zugstellung abhängig sind, kann durch Einsatz eines stärkeren Magneten ggf. eine verbesserte Auswertung ermöglicht werden.

Die vorliegende Erfindung ist nicht auf die vorgenannten Ausführungsbeispiele beschränkt und kann in beliebigen Geräten eingesetzt werden, bei denen eine Positionsbestimmung eines beweglichen Teils erforderlich ist. Auch die Form und Gestalt der Sensoranordnung 20 und des Magneten 10 sind nicht auf die Ausführungsbeispiele beschränkt. In der Sensoranordnung können auch mehrere Sensorzellen zur Verbesserung der Erfassung des Differenzsignals vorhanden sein. Es können auch mehrere Magnete zur Erzeugung mehrerer Messfelder in Kombination mit einer oder mehreren Sensoranordnungen vorgesehen sein.

Zusammenfassend wurden eine Vorrichtung und ein Verfahren zur Positionsbestimmung beschrieben, wobei die Position eines ersten mechanischen Elements in Bezug auf ein zweites mechanisches Element basierend auf einem mittels eines Magneten erzeugten Magnetfelds bestimmt wird, das bei einer relativen Bewegung zwischen dem ersten mechanischen Element und dem zweiten mechanischen Element im Wesentlichen um einen Rotationspunkt wandert und dessen Hauptrichtung beim Wandern immer im Wesentlichen auf den Rotationspunkt zeigt. Das Nahfeld des Magnetfelds wird an zwei verschiedenen Orten erfasst, zwischen denen sich der Rotationspunkt befindet, und die Positionsbestimmung erfolgt auf Grundlage der Differenz der Messwerte an den beiden verschiedenen Orten.

## Patentansprüche

1. Positionsbestimmungsvorrichtung zur Bestimmung der Position eines ersten mechanischen Elements (70) in Bezug auf ein zweites mechanisches Element (72), mit:
- einem mit dem ersten mechanischen Element (70) starr gekoppelten Magneten (10) zur Erzeugung eines Magnetfelds;
- einer mit dem zweiten mechanischen Element (72) starr gekoppelten Sensoranordnung (20) mit zwei Magnetfeldsensoren (21) zur Erfassung des Magnetfelds des Magneten (10);
- wobei der Magnet (10) so angeordnet ist, dass er bei einer Relativbewegung zwischen dem ersten mechanischen Element (70) und dem zweiten mechanischen Element (72) im Wesentlichen um einen im Bereich der Sensoranordnung befindlichen Rotationspunkt wandert;
- wobei die zwei Magnetfeldsensoren (21) so angeordnet sind, dass sich der Rotationspunkt (25) zwischen den zwei Magnetfeldsensoren (21) befindet;
- wobei die magnetische Achse des Magneten (10) bei dessen Wanderung immer im Wesentlichen auf den Rotationspunkt (25) zeigt;
- wobei sich die zwei Magnetfeldsensoren (21) im Nahfeld des Magneten (10) befinden;
- wobei die Positionsbestimmungsvorrichtung ausgestaltet ist, die Position auf Grundlage der Differenz der Messwerte der beiden Magnetfeldsensoren zu bestimmen;
- wobei die Magnetfeldsensoren (21) dreidimensional messende Hallelemente aufweisen und;
- wobei die Positionsbestimmungsvorrichtung ausgestaltet ist, zur Positionsbestimmung zwei Raumwinkel eines Differenzvektors der von den zwei Magnetsensoren (21) gemessenen Vektoren des Magnetfelds heranzuziehen.

2. Vorrichtung nach Anspruch 1, wobei der Magnet (10) ein zylindrischer Magnet ist.

3. Vorrichtung nach einem der Ansprüche 1 oder 2, wobei das erste Element (70) ein Joystick-Hebel, ein Drehschalterknopf oder ein Lenkstockschalterhebel ist.

4. Vorrichtung nach einem der vorhergehenden Ansprüche, wobei der Rotationspunkt (25) im Wesentlichen auf einer Verbindungslinie zwischen den beiden Magnetfeldsensoren (21) angeordnet ist.

5. Vorrichtung nach einem der vorhergehenden Ansprüche, wobei der Magnet (10) in Bezug auf die Ebene der Magnetfeldsensoren (21) in einem vorbestimmten Höhenwinkel liegend angeordnet ist.

6. Vorrichtung nach Anspruch 5, wobei der vorbestimmte Höhenwinkel aus einem Bereich zwischen 35° und 65° gewählt ist.

7. Vorrichtung nach einem der Ansprüche 1 bis 4, wobei der Magnet (10) in Bezug auf die Ebene der Magnetfeldsensoren (21) senkrecht stehend angeordnet ist.

8. Verfahren zur Bestimmung der Position eines ersten mechanischen Elements (70) in Bezug auf ein zweites mechanisches Element (72), mit den Schritten:
- Erzeugen eines Magnetfelds, das bei einer relativen Bewegung zwischen dem ersten Element (70) und dem zweiten Element (72) im Wesentlichen um einen Rotationspunkt wandert und dessen Hauptrichtung beim Wandern immer im Wesentlichen auf den Rotationspunkt zeigt;
- Erfassen des Nahfelds des Magneten an zwei verschiedenen Orten, zwischen denen sich der Rotationspunkt befindet; und
- Bestimmen der Position des ersten mechanischen Elements (70) auf Grundlage der Differenz der Messwerte an den beiden verschiedenen Orten, wobei zur Positionsbestimmung zwei Raumwinkel eines Differenzvektors zweier mittels dreidimensional messenden Hallelementen (21) gemessener Vektoren herangezogenen werden.

## Claims

1. Position determining device for determining the position of a first mechanical element (70) relative to a second mechanical element (72), comprising:
- a magnet (10), which is rigidly coupled to the first mechanical element (70), for generating a magnetic field;
- a sensor arrangement (20), which is rigidly coupled to the second mechanical element (72), having two magnetic field sensors (21) for detecting the magnetic field of the magnet (10);
- wherein the magnet (10) is arranged such that it moves substantially about a point of rotation, located in the region of the sensor arrangement, during a relative motion between the first mechanical element (70) and the second mechanical element (72);
- wherein the two magnetic field sensors (21) are arranged such that the point of rotation (25) is located between the two magnetic field sensors (21);
- wherein the magnetic axis of the magnet (10) always points substantially towards the point of rotation (25) when said magnet moves;
- wherein the two magnetic field sensors (21) are located in the near field of the magnet (10);
- wherein the position determining device is designed to determine position on the basis of the difference between the measured values of the two magnetic field sensors;
- wherein the magnetic field sensors (21) comprise three-dimensionally measuring Hall elements; and
- wherein the position determining device is designed to use two solid angles of a differential vector of the vectors of the magnetic field, which vectors are measured by the two magnet sensors (21), in order to determine position.

2. Device according to claim 1, wherein the magnet (10) is a cylindrical magnet.

3. Device according to either claim 1 or claim 2, wherein the first element (70) is a joystick lever, a rotary knob or a steering column switch lever.

4. Device according to any one of the preceding claims, wherein the point of rotation (25) is arranged substantially on a connecting line between the two magnetic field sensors (21).

5. Device according to any one of the preceding claims, wherein the magnet (10) is arranged horizontally at a predetermined angle of elevation relative to the plane of the magnetic field sensors (21).

6. Device according to claim 5, wherein the predetermined angle of elevation is selected from a region of between 35° and 65°.

7. Device according to any one of claims 1 to 4, wherein the magnet (10) is arranged so as to be vertically upright relative to the plane of the magnetic field sensors (21).

8. Method for determining the position of a first mechanical element (70) relative to a second mechanical element (72), comprising the steps of:
- generating a magnetic field that moves substantially about a point of rotation located during a relative motion between the first element (70) and the second element (72), and the principal direction of which always substantially points towards the point of rotation when said field moves;
- detecting the near field of the magnet at two different locations, between which the point of rotation is located; and
- determining the position of the first mechanical element (70) on the basis of the difference between the measured values at the two different locations, wherein two solid angles of a differential vector of two vectors, which vectors are measured by means of three-dimensionally measuring Hall elements (21), are used in order to determine position.

## Revendications

1. Dispositif de détermination de position destiné à déterminer la position d'un premier élément mécanique (70) par rapport à un deuxième élément mécanique (72), comprenant :
- un aimant (10) accouplé rigidement au premier élément mécanique (70) et destiné à générer un champ magnétique ;
- un ensemble de capteurs (20) pourvu de deux capteurs de champ magnétique (21), accouplé rigidement au deuxième élément mécanique (72), et destiné à détecter le champ magnétique de l'aimant (10) ;
- l'aimant (10) étant agencé de manière à se déplacer autour d'un point de rotation situé dans la zone de l'ensemble de capteurs lors d'un déplacement relatif entre le premier élément mécanique (70) et le deuxième élément mécanique (72) ;
- les deux capteurs de champ magnétique (21) étant agencés de telle manière que le point de rotation (25) se situe entre les deux capteurs de champ magnétique (21) ;
- l'axe magnétique de l'aimant (10), lors du déplacement de ce dernier, désignant toujours sensiblement le point de rotation (25) ;
- les deux capteurs de champ magnétique (21) se situant dans le champ proche de l'aimant (10) ;
- le dispositif de détermination de position étant conçu pour déterminer la position sur la base de la différence des valeurs de mesure des deux capteurs de champ magnétique ;
- les capteurs de champ magnétique (21) présentant des éléments à effet Hall à mesure tridimensionnelle et ;
- le dispositif de détermination de position étant conçu, pour déterminer la position, pour utiliser deux angles solides d'un vecteur de différence des vecteurs du champ magnétique mesurés par les deux capteurs magnétiques (21).

2. Dispositif selon la revendication 1, l'aimant (10) étant un aimant cylindrique.

3. Dispositif selon l'une quelconque des revendications 1 ou 2, le premier élément (70) étant un levier à manette, un commutateur rotatif ou un levier de commodo.

4. Dispositif selon l'une quelconque des revendications précédentes, le point de rotation (25) étant agencé sensiblement sur une ligne de liaison entre les deux capteurs de champ magnétique (21).

5. Dispositif selon l'une quelconque des revendications précédentes, l'aimant (10) étant agencé de manière à se situer dans un angle d'élévation prédéfini par rapport au plan des capteurs de champ magnétique (21).

6. Dispositif selon la revendication 5, l'angle d'élévation prédéfini étant sélectionné dans une plage comprise entre 35° et 65°.

7. Dispositif selon l'une quelconque des revendications 1 à 4, l'aimant (10) étant agencé de manière à être perpendiculaire au plan des capteurs de champ magnétique (21).

8. Procédé de détermination de la position d'un premier élément mécanique (70) par rapport à un deuxième élément mécanique (72), comprenant les étapes suivantes :
- générer un champ magnétique, qui se déplace sensiblement autour d'un point de rotation lors d'un déplacement relatif entre le premier élément (70) et le deuxième élément (72), et dont la direction principale désigne toujours sensiblement le point de rotation ;
- détecter le champ proche de l'aimant en deux lieux différents entre lesquels le point de rotation se situe ; et
- déterminer la position du premier élément mécanique (70) sur la base de la différence des valeurs de mesure aux deux endroits différents, deux angles solides d'un vecteur de différence de deux vecteurs mesurés au moyen d'éléments à effet Hall (21) à mesure tridimensionnelle étant utilisés pour déterminer la position.
